# EUROPEAN PATENT APPLICATION

(11) **EP 3 672 306 A1**
(43) Date of publication of application: **24.06.2020**
(21) Application number: 18382948.0
(22) Date of filing: 20.12.2018
(51) Int. Cl.: H04W 12/00, H04W 12/08, H04W 84/18

(54) **METHOD FOR LINKING A PLURALITY OF DEVICES THROUGH BLUETOOTH LOW ENERGY PROTOCOL**

(71) Applicant: Baintex Technologies, S.L., 46980 Paterna (Valencia) (ES)
(72) Inventor: Esteve Esteve, José Miguel, 46980 Paterna (ES); Escriche Izquierdo, Carlos, 46980 Paterna (ES); Sendra Estrella, Alberto, 46980 Paterna (ES)
(74) Representative: Sahuquillo Huerta, Jesús

(57) **Abstract**

A computer-implemented method for linking multiple devices using the BLE protocol in a BLE network that comprises at least one master device (M1...Mn), at least one slave device (E1...En) and at least one central server (CS); and that comprises the stages of: (a) requesting the pairing of a master device (M1...Mn) with at least one slave device (E1...En); where that slave device (E1...En) is physically located in a location (L1...Ln) next to the master device (M1...Mn) which has made the request; (b) confirm the pairing between the master device (M1...Mn) that has made the pairing request and the slave device (E1...En) located in a certain physical location (L1...Ln); and where the confirmation of the pairing will be executed by the central server (CS) through the generation and exchange of unique 128-bit keys with the master device (M1...Mn) and the slave device (E1...En), all this in such a way that only the pairing will be confirmed if the master device (M1...Mn) that performs the pairing request is authorised by the server (SC) to control the slave device (E1...En) whose pairing has been requested for physical localisation (L1...Ln) where the pairing has been requested.

## Description

A purpose of this invention is a method and a system for improving the BLE (Bluetooth Low Energy) protocol, particularly when a high number of devices are communicating. This invention refers to a method for linking devices in the automation of homes, businesses, buildings or installations of any kind.

### PRIOR ART

The BLUETOOTH LOW ENERGY protocol (hereinafter simply BLE) is the main feature of version 4.0 of the BT (Bluetooth) spec core. This version was introduced in June 2010 by the Bluetooth special interest group (SIG). Despite being based on BT Classic, the BLE protocol is a wireless technology designed to cover purposes not covered by its predecessor. The main purpose of this protocol is to design a radio standard with the least possible energy consumption, especially optimised to have a low cost, with low bandwidth, low power and equally low complexity.

The BLE protocol facilitates short-range communications between devices that do not require large data transfers, with the main idea of providing an efficient technology for monitoring and controlling applications where the amounts of data are typically very low, such as sending sensor values or control messages.

The BLE network topology is star-type. Master devices can have multiple link-layer connections with peripherals (slave devices) and simultaneously perform searches for other devices. On the other hand, a slave role device can only have one link-layer connection with a single master. In addition, a device can send data in broadcast mode, advertising events, without waiting for any connection. This allows it to send data to the devices in scanning state without having to establish the master-slave connection.

For the device management, connection and application interface BT's SIG defines a stack of protocols. The BLE protocol stack is divided into three basic parts: Controller, Host and Applications. The controller is the physical device that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the host; each operating system or environment has its own way of exposing host APIs (Application Programming Interface) for developers. This part of the stack contains a layer of logical link control and adaptation protocol, security manager, attribute protocol (ATT), generic attribute profile (GATT) and generic access profile (GAP). For each use case, applications use the software stack, which in turn uses the driver.

Bluetooth Low Energy shares some similarities with classic Bluetooth. Both use a 2.4 GHz band. Classic Bluetooth and BLE use the GFSK to 1Mbps modulation, but with different modulation indices. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth, they are incompatible with each other, so they cannot communicate. However, there are Dual Mode devices that support both technologies by switching the modulation parameters and channels where they are radiating.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity of less than -85 dBm.

The link layer is the layer responsible for the states of Advertising, Scanning and creating and maintaining connections. It is also responsible for the structure of the packets. The BLE protocol defines a series of operating modes. So, in the Standby mode the device neither transmits nor receives. In general, this state is associated with a sleeper system to conserve energy.

In the advertising mode, the device that has the peripheral role enters the Advertising state in which it sends Advertising packets in the advertising channels. In this state it also hears any response (request) of the packets from the central device. This mode is one of the most critical to analyse from a power point of view because the peripheral device will take an Advertising time, depending on the application. It is necessary to consider that the transmission time affects energy consumption; therefore, the Advertising range directly affects the power consumption and the life of the batteries.

The Scanning's mode refers to listening to Advertising packets sent through its channels. This mode is used to explore devices. In initiating mode, it is the state that the central device enters (master) before switching to connection status. The central device listens to the Advertising of peripherals, but once it receives the Advertising of the desired peripheral, the central device must connect by sending the correct data. For the Slave, the Advertising state is also considered an initial state before the connection state. The connection state is the last state in which the Slave (peripheral) and master (Central) can exchange data. They exchange data periodically through connection events.

So far, the main elements that make up the BLE protocol have been described in a schematic way. Examples of documents that describe some aspects of the BLE protocol are, for example, documents US2018176776, US2018091932, US2017325161, or EP2999297. None of these documents, however, describes how to improve the link between devices. Indeed, the device linking mode present in BLE is not completely secure and, in addition, it is not transparent for the user, who must enter a key. In addition, every user who wants to use a device must link this device to their mobile phone, and it can only be linked to one mobile device at a time.

### BRIEF DESCRIPTION OF THE INVENTION

A purpose of this invention is a method to facilitate the secure link between multiple mobile devices under the BLE protocol is. This link has the peculiarity of being transparent for the user. This purpose is achieved with the method of claim 1. In other claims dependent on it, or preferred realisations of the invention are described.

The traditional method for pairing two BT devices is done by adding the key of the slave device desired to be connected to the master device. Typically, each device has a default key that is changed once the first connection is made. In the method described in the state of the art, the number of devices to which it can be paired - usually a single device - is limited, although in some cases it is possible to establish two simultaneous connections. However, if a change of the device from which to control it is desired, it must be unlinked from the first device to which it is paired, then the pairing process with the new device must be performed.

Using the invention's method, however, the process is notably simplified and is transparent for the user. Thus, when pairing a slave device with a master is desired, it is only necessary to press a button on the slave device so that it broadcasts an encrypted packet of 128 bits, compared to the 32 bits described in the state of the art, which is read by the master device and automatically added as a paired device. The key is exchanged between the slave device and a server without the user having to enter any key.

Therefore, the invention's method makes it unnecessary to use a PIN to match the master-slave device. Each slave device, moreover, can be managed by an unlimited number of users-where each user has a master device linked to the slave-device. The management of communications is done through the master device, but the messages are sent by the server. So, there can be multiple users discharged on the server for the same set of devices (for example, a home, building, or installation). Logically, each user has access to an unlimited number of devices.

Another advantage of the method used in the invention is that when a user adds a slave device to a location, the server automatically matches the master devices of the other users with permissions for the same location registered on the server. In the same way, when a user with permissions on the server removes a device, it is automatically deleted for the rest of the users. Users and their permissions are managed from and by the server. Thus, there can be different types of users such that a user with sufficient permissions can revoke the use permissions of other users with a lower level of authorisation.

Throughout the description and claims the word "understands" and its variants are not intended to exclude other technical characteristics, additives, components or steps. For experts in the field, other purposes, advantages and features of the invention will be gathered partly from the description and partly from practicing the invention. The following examples and drawings are provided as an illustration and are not intended to restrict this invention. In addition, this invention covers all possible combinations of preferred realisations indicated herein.

### BRIEF DESCRIPTION OF THE FIGURES

Below a series of drawings are briefly described that help to better understand the invention and are explicitly related to a realisation of such an invention that is presented as a non-limiting example of it.
FIG. 1.- Shows a diagram of the portable electronic device that implements this invention.
FIG 2.- Shows the diagram of an architecture of a computer system that illustrates the architecture of a server used in the different practical realisations of the invention.
FIG. 3.- Shows the diagram of a network architecture that illustrates an illustrative operating environment for the different practical realisations of the invention.
FIG. 4.- Shows a diagram with the BLE network architecture that illustrates an operating environment of the method for linking multiple devices using BLE protocol.
FIG 5.- Shows a first screen of the executable application on a portable electronic device of FIG. 1 and implements the operating environment of the method for linking multiple devices using BLE protocol.
FIG 6.- Shows a second screen of the executable application on a portable electronic device of FIG. 1 and implements the operating environment of the method for linking multiple devices using BLE protocol.
FIG 7.- Shows a third screen of the executable application on a portable electronic device of FIG. 1 and implements the operating environment of the method for linking multiple devices using BLE protocol.
FIG 8.- Shows a fourth screen of the executable application on a portable electronic device of FIG. 1 and implements the operating environment of the method for linking multiple devices using BLE protocol.

### DETAILED EXPLANATION OF ONE MODE OF REALISATION OF THE INVENTION

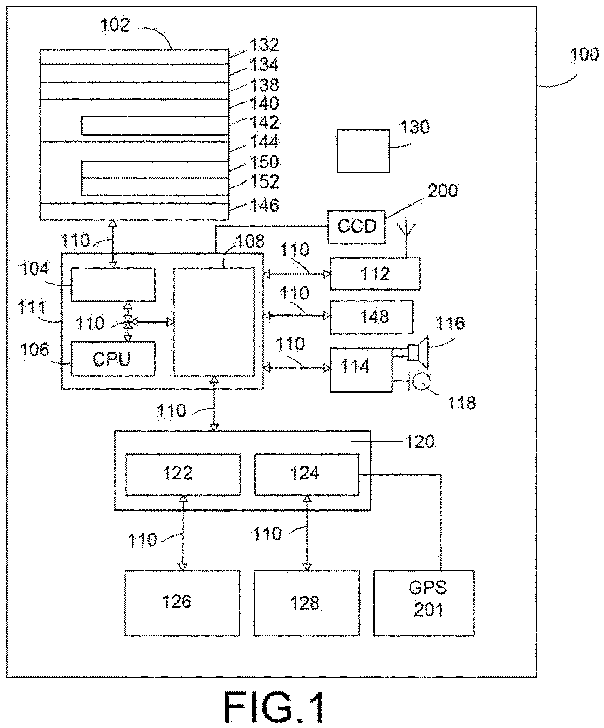

This invention is implemented on a 100 portable electronic device that can be any selected among computers, tablets and mobile phones, although a preferred architecture for a mobile device is shown in Figure 1. In general, any programmable communications device can be configured as a device for this invention.

Figure 1 illustrates a portable electronic device, based on certain realisations of the invention. The invention's portable electronic device 100 includes a memory 102, a memory controller 104, one or more processing units (CPU) 106, a peripherals interface 108, a RF circuit system 112, an audio circuit system 114, a loudspeaker 116, a microphone 118, a input/output subsystem (I/O) 120, a touch screen 126, other input 128 or monitoring devices and an external port 148. These components communicate with each other on one or more communication buses or signal lines 110. The device 100 can be any portable electronic device, including, but not limited to, a laptop, a tablet, a mobile phone, a multimedia player, a personal digital assistant (PDA), or similar device, including a combination of two or more of these items. It should be observed that the device 100 is only one example of a portable electronic device 100 and that the device 100 may have more or fewer components than those displayed or a different configuration of components. The different components shown in Figure 1 can be implemented in hardware, software, or a combination of both, including one or more integrated circuits of specific application and/or signal processing. Likewise, the screen 126 is defined as touch, although the invention can also be implemented on devices with a standard screen.

The memory 102 may include a high-speed random-access memory and may also include non-volatile memory, such as one or more magnetic disk storage devices, flash memory devices or other non-volatile solid-state memory devices. In some realisations, the memory 102 may also include remote storage with respect to one or more processors 106, such as a storage connected to a network that is accessed through the RF circuits system 112 or external port 148 and a communications network (not shown) such as the Internet, intranet(s), local area networks (LANs), extended local area networks (WLAN), storage area networks (SAN), and so forth, or any of their appropriate combinations. Access to memory 102 by other components of the device 100, such as the CPU 106 and the peripherals interface 108, can be controlled by the memory controller 104.

The peripherals interface 108 connects the device's input and output peripherals to the CPU 106 and the memory 102. One or more processors 106 run different software programs and/or instruction sets stored in memory 102 to perform the different functions of the device 100 and for data processing.

In some realisations, the peripheral interface 108, the CPU 106, and the memory controller 104 can be deployed on a single chip, such as a chip 111. In certain other realisations they can be implemented on multiple chips.

The RF (radio frequency) circuit system 112 receives and sends electromagnetic waves. The RF circuit system 112 converts electrical signals into electromagnetic waves and vice versa and communicates with communications networks and other communications devices through electromagnetic waves. The RF circuit system 112 can include a widely known circuit system to perform these functions, including but not limited to an antenna system, RF transceiver, one or more amplifiers, a tuner, one or more oscillators, a digital signal processor, a set of CODEC chips, a subscriber identity module (SIM) card, a memory, or any other. The RF circuit system 112 can communicate with networks, such as the Internet, also known as the World Wide Web (WWW), an Intranet and/or a wireless network, such as a cellular telephone network, a wireless local area network (LAN) and/or a metropolitan area network (MAN) and with other devices using wireless communication. Wireless communication can use any of multiple communications standards, protocols, and technologies, including, but not limited to, the Global mobile Communications System (GSM), the enhanced GSM Data Environment (EDGE), Broadband Code Division Multiple Access (W-CDMA), Code Division Multiple Access (CDMA), Time Division Multiple Access (TDMA), Bluetooth, wireless access (WiFi under protocols, e.g., IEEE 802.11 a, IEEE 802.11 b, IEEE 802.11 g and/or IEEE 802.11 n), voice over IP (VoIP) protocol, Wi-MAX, a protocol for e-mail, instant messaging and/or short message service (SMS) or any other appropriate communication protocol, including communication protocols not yet developed at this document's date of submission.

The audio circuit system 114, the loudspeaker 116 and the microphone 118 provide an audio interface between a user and the device 100. The audio circuit system 114 receives audio data from the peripherals interface 108, converts the audio data to an electrical signal and transmits the electrical signal to the loudspeaker 116. The loudspeaker converts the electrical signal to sound waves that are audible for human beings. The audio circuit system 114 also receives electrical signals converted by microphone 116 from sound waves. The audio circuits system 114 converts the electrical signal into audio data and transmits the audio data to the peripherals interface 108 for processing. The audio data can be recovered and/or transmitted to the memory 102 and/or the RF circuit system 112 via the peripherals interface 108. In some realisations, the audio circuit system 114 also includes a headphone connection (not shown). The headphone connection provides an interface between the audio circuit system 114 and removable audio input/output peripherals, such as output-only headphones or both output earphones (earphones for one or both ears) and input earphones (microphone).

The I/O subsystem 120 provides the interface between the input/output peripherals of the device 100, such as the touch screen 126 and other input/control devices 128, and the peripheral interface 108. The I/O subsystem 120 includes a touch-screen controller 122 and one or more input controllers 124 for other input or control devices. The input controller (2) 124 receive /send electrical signals to/from other input or control devices 128. The other input/control devices 128 may include physical buttons (e.g. push buttons, toggle buttons, etc.), dials, slide switches, and/or geographic location media 201, such as GPS or equivalent.

The touch screen 126 in this practical realisation provides both an output interface and an input interface between the device and a user. The touch screen controller 122 receives/sends electrical signals to/from touch screen 126. The touch screen 126 displays the user's visual output. The visual output can include text, graphics, video and any combination thereof. Part or all of the visual output can be matched with UI objects, the additional details of which are later described.

The touch screen 126 also accepts user inputs based on haptic or touch contact. The touch screen 126 forms a contact-sensitive surface that accepts the user's inputs. The touch screen 126 and the controller 122 of the touch screen (along with any of the associated modules and/or sets of memory instructions 102) detects contact (and any movement or loss of contact) on the touch screen 126 and converts the contact detected in interaction with user interface objects, such as one or more programmable keys that are displayed on the touch screen. In a realisation as an example, a contact point between the touch screen 126 and the user corresponds to one or more of the user's fingers. The touch screen 126 can use LCD (liquid crystal display) technology or LPD (light-emitting polymer display) technology, although other display technologies can be used in other realisations. The touch screen 126 and the touch screen controller 122 can detect contact and any movement or lack of it using any of multiple contact sensitivity technologies, including, but not limited to, capacitive, resistive, infrared and surface sound-wave technologies, as well as other proximity sensor provisions or other elements to determine one or more contact points with the touch screen 126.

The device 100 also includes a power supply system 130 to feed the different components. The power supply system 130 can include an energy management system, one or more power supplies (e.g. batteries, AC), a rechargeable system, a power failure detection circuit, an energy converter or inverter, an energy state indicator (for example, a light-emitting diode (LED)) and any other component associated with power generation, management, and distribution on portable devices.

In some realisations, software components include an operating system 132, a communication module 134 (or instruction set), a contact/motion module (or instruction set) 138, a graphic module (or instruction set) 140, a user interface status module (or instruction set) 144 and one or more applications (or instruction set) 146.

The operating system 132 (e.g. iOS, RTXC, LINUX, UNIX, OS X, WINDOWS, or an embedded operating system), includes different software components and/or controllers to control and manage general system tasks (e.g. memory management, storage device control, energy management, etc.) and facilitate communication between the different hardware and software components.

The communication module 134 facilitates communication with other devices through one or more external ports 148 and includes different software components to manage the data received by the RF circuit system 112 and/or external port 148. The external port 148 (e.g. Universal Serial Bus (USB), FIREWIRE, etc.) is adapted to connect directly to other devices or indirectly over a network (e.g., Internet, wireless LAN, etc.).

The contact/motion module 138 detects contact with the touch screen 126, along with the touch screen controller 122. The contact/motion module 138 includes different software components to perform different operations related to detecting contact with the touch screen 126, such as determining whether the contact has occurred, determining whether there is movement of the contact and keep track of the movement through the touch screen, and determine if the contact has been interrupted (i.e. if the contact has stopped). The determination of the movement of the contact point may include determining the speed (magnitude), velocity (magnitude and direction) and/or acceleration (including magnitude and/or direction) of the point of contact. In some realisations, the contact/motion module 126 and the touch screen controller 122 also detect contact on the touch pad.

The graphic module 140 includes different well-known software components for showing and displaying graphics on the touch screen 126. Note that the term "graphics" includes any object that may be shown to a user, including but not limited to text, web pages, icons (such as user interface objects that include programmable keys), digital images, videos, animations and the like.

In some realisations, the graphic module 140 includes an optical intensity module 142. The optical intensity module 142 controls the optical intensity of graphic objects, such as user interface objects, displayed on the touch screen 126. Optical intensity control may include increasing or decreasing the optical intensity of a graphic object. In some realisations, the increase or decrease can follow predetermined functions.

The user interface status module 144 controls the status of the device's user interface 100. The user interface status 144 can include a locking module 150 and an unlocking module 152. The block module detects the satisfaction of any one or more conditions to transition the device 100 to a locked state in the user interface and transition the device 100 to the locked state. The unlock module detects whether any one or more conditions are met to transition the device 100 to a locked state in the user interface and transition the device 100 to the locked state.

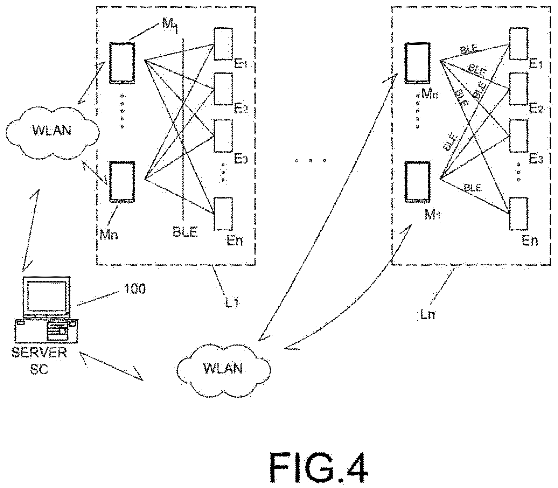

The application or applications 130 may include any application installed on the device 100, including but not limited to a browser, address Book, contact list, email, IM, word processing, keyboard emulation, graphical objects, JAVA applications, encryption, digital rights management, voice recognition, voice replication, position determination capability (as provided by the global positioning system (GPS)), a music player (which plays recorded music stored on one or more files, such as MP3 or AAC files) or any other, including the application object of the invention, as detailed in reference to figures 4 and later.

In some realisations, the 100 device may include one or more optional optical sensors (not shown), such as CMOS or CCD 200 image sensors, for use in imaging applications.

However, the hardware structure indicated is one of those that are possible, and it should be noted that the device 100 can include other image capture elements such as camera, scanner, laser plotter or the combination of any of these types of devices, which can provide the mobile device with the representation of the real environment in video format, image sequence, vector format or any type of combination of the aforementioned formats.

Similarly, the device 100 may include geographic location devices based on GPS positioning satellite networks, geographic location assist devices based on GPS satellite networks and Internet network IP localisation - AGPS-, geographic localisation devices based on the triangulation of radio signals provided by WIFI antennas and Bluetooth® devices (ISSP), the combination of any of these aforementioned devices or any type of device that allows providing the mobile device with numerical data on its geographical location.

The 100 device can include any type of element capable of representing real-time images with a minimum of 24 FPS (frames per second) such as TFT, TFT-LED, TFT-OLED, TFT-Retina, the combination of any of the previous, in addition to new generation screens Holo-TFT, transparent and micro-projectors or any graphic representation device that can provide the mobile device 100 a way to represent visual content to the user.

The device 100 includes a processor or set of processors that by themselves or in combination with graphics processors such as GPU (graphics processing unit) or APU (Accelerated Processing Unit) can provide the mobile device 100 with the ability to represent, in real runtime, vector graphics and shape texturized polygons with these via vector representation libraries (standardised procedure sets of graphical representation for different platforms), like OpenGL, DirectX or any type of libraries used for this purpose.

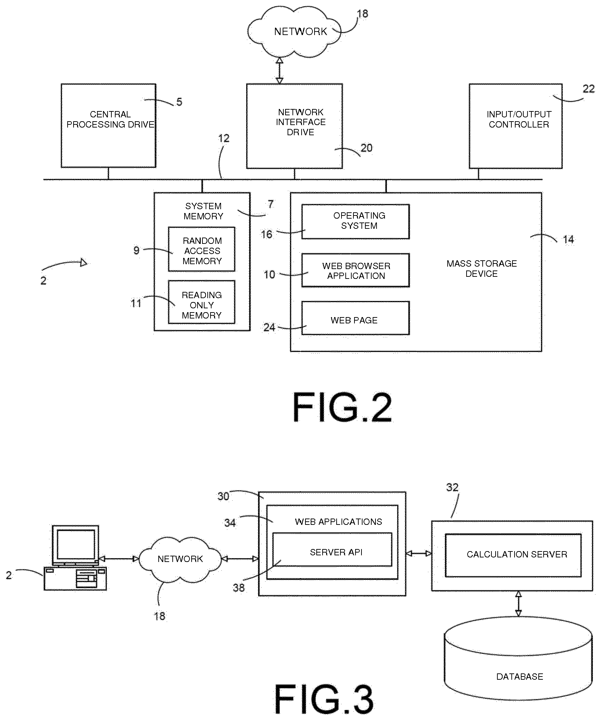

Figures 2 and 3 and the corresponding description are intended to provide a brief, general description of an appropriate computing environment (a server and a personal computer) in which the forms of realizing the invention can be implemented. Although the invention will be described within the general context of program modules running on server computer systems and mobile devices 100, experts in the field may notice that the invention can also be implemented in combination with other types of computer systems and program modules.

Program modules include routines, programs, components, data structures, and other types of structures that perform specific tasks or implement specific abstract data types. The invention can also be put into practice in distributed computing environments where tasks are carried out through remote processing devices that are linked through a communications network. In a distributed computing environment, program modules can be located on both local devices and remote memory storage devices.

With reference to Figure 2 now, an illustrative computer architecture will be described for a computer 2 used in the various forms of realisation of the invention. The computer architecture, shown in Figure 2, illustrates a conventional desktop or notebook computer and can also be used as a server, which includes a central processing unit (CPU) 5, a memory system 7, which includes a Random-Access Memory (RAM) 9 and a read-only memory (ROM) 11, and a bus 12 from the system that attaches memory to CPU 5. A basic input / output system that contains the basic routines that help to transfer information between the elements located on the computer, during startup for example, is stored in the ROM 11. The computer 2 also includes a mass storage device 14 to store an operating system 16, application programs, and other program modules, which will be described in more detail in the following lines.

The mass storage device 14 is connected to CPU 5 using a mass storage driver (not shown) connected to bus 12. The mass storage device 14 and its associated computer-readable media provide non-volatile storage to the computer 2. Although the description of the computer-readable media contained in this report refers to a mass storage device, such as a hard drive or a CD-ROM drive, the experts in the field should know that the computer-readable media can be any media that can be accessed via the computer 2.

To give just one example, computer-readable media can understand some computer storage media and some media outlets. Computer storage media include volatile and non-volatile, removable and non-removable media implemented in any storage procedure or technique, such as computer-readable instructions, data structures, program modules, or other data. Computer storage media include, but are not limited to, RAM, ROM, EPROM, EEPROM, flash memory or other solid state memory techniques, CD-ROMs, versatile digital Disks (DVDs) or other optical storage devices, magnetic cassettes, magnetic tapes, storage devices of magnetic discs or other magnetic storage devices or any other means which can be used to store the desired information and which can be accessed using a computer 2.

According to various forms of realisation of the invention, the computer 2 can operate in a networked connection environment using logical connections with remote computers via a network 18, such as the Internet. The computer 2 can connect to the network 18 through an interface unit 20 with the network connected to the bus 12. The network interface 20 can also be used to connect with other types of networks and remote computer systems. The computer 2 can also include an in/out controller 22 for receiving and processing an input from multiple other devices, including a keyboard and an electronic punch (not shown in Figure 2). Similarly, an in / out controller 22 can provide an output to a display screen, printer, or other output device type.

As briefly stated above, multiple program modules and data files can be stored in the mass storage device 14 and on the computer 2 RAM 9, including an appropriate operating system 16 for monitoring the operation of the personal computer connected to the network, such as the WINDOWS® operating system by MICROSOFT CORPORATION®, Mac OS X, Linux or Unix. The mass storage device 14 and RAM 9 can also store one or more program modules. In particular, the mass storage device 14 and RAM 9 can store a program 10 of a web browser application. As experts in the matter well know, the web browser application program 10 is operative to request, receive, reproduce and provide interactivity with electronic documents, such as a web page 24 that has been formatted using HTML. Likewise, the web browser application program 10 can be used to run commands contained on the web page 24, such as commands that use the JAVASCRIPT language developed by SUN MICROSYSTEMS, INC. According to one form of realisation of the invention, the web browser application program 10 comprises the web browser application program INTERNET EXPLORER by the MICROSOFT CORPORATION. It should be noted, however, that other web browser application programs from other manufacturers can be used to materialise the various aspects of the invention herein, such as the FIREFOX web browser application by MOZILLA.

The web page 24 can include HTML and directives which, when represented by the web browser application 10, provide a visual representation of a program or programs stored in the computer 2 acting as server 30. Likewise, the directives included in the web page 24 make it possible for a computer user to interact with the representation provided by the web browser application 10 and modify the application 10.

With reference to Figure 3, a diagram of a network architecture illustrating an operating environment will be described for the various forms of realisation of the invention. As shown in figure 3, the computer 2 is connected to a network 18. There is also an applications server 30 connected to the network 18. The applications server 30 comprises a computer of the server which may contain any or all of the conventional computer components described previously in relation to figure 1. Also, the application server 30 is operating to run a web server application to receive and respond to requests related to documents stored in or accessible to the applications server 30. Also, the application server 30 is operational to receive and respond to requests related to the pages generated by a web application 34. It should be appreciated that the web application 34 can understand an executable code on the application server 30, an executable code to communicate with other computers, and can include templates, graphics, audio files and other content known to experts in the field.

According to another aspect of the invention the web application 34 is operational to provide an interface with a computer user 2 to interact with the programme or programmes covered by this invention and accessible through the network 18. In particular, the web application 34 uses an application programming interface (API) 38 of the server.

As will be discussed in more detail below the computer 2 can broadcast a request to the application server 30 to view the work interface of the invention within the context of the web browser application 10. In response to this request, the web application 34 communicates with the server 32 of calculation using the API 38 of the server.

In reference to figure 4, the system implementing the method of this invention comprises a central server (CS) (i.e. a computer 2, as described in reference to figures 2 and 3), multiple mobile devices that correspond to different 100 portable electronic devices, as described in figure 1, where the mobile devices 100 are configured on a network under the BLE protocol as *masters* (M1... Mn) of multiple slaves (E1...En) arranged in a single location (L1...Ln).

In this invention it is understood that a *master* device (M1... Mn) can be paired with one or more slaves (E1...En) within a single location at the same time. By location, specific geographical locations (for example, building "A") and locations within geographical locations (e.g., room 1, building "A") will be understood.

On the other hand, *slave* device (E1...En) is defined as any device within a particular location that comprises or integrates a processor and a memory that stores a program or programs that include multiple instructions that, when executed by the processor, make the slave device (E1...En) respond to a given instruction received from a master device (M1...Mn) paired with this slave device (E1...En) in a given location (L1...Ln).

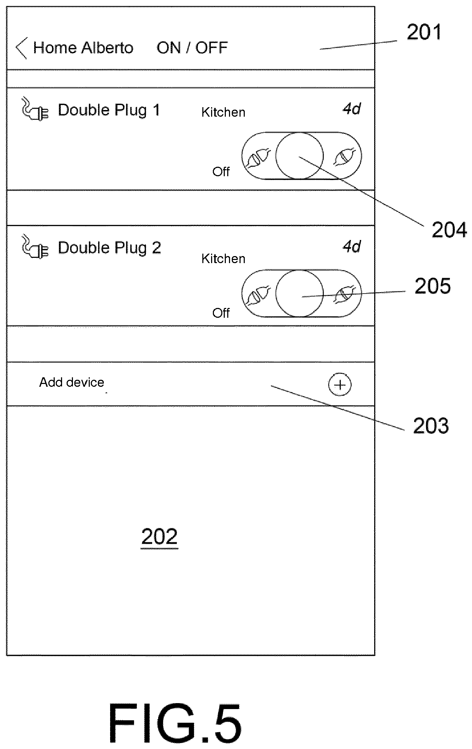

To start the pairing process, the user only has to enter a certain location 201 or category of an application 202 installed on their mobile device 100 that acts as master (M1...Mn) and select the button "add device" 203. As shown in figure 5, the example represents a series of devices already paired or linked, which in this particular case (though not the only one) are two plugs, 204 and 205, which can be activated or deactivated using a switch.

The "add device" option 203 will internally configure multiple parameters and simplify the process even more. After this a second screen 204 will open in the application 202 with a button 205 that can be pressed by the user of the device 100.

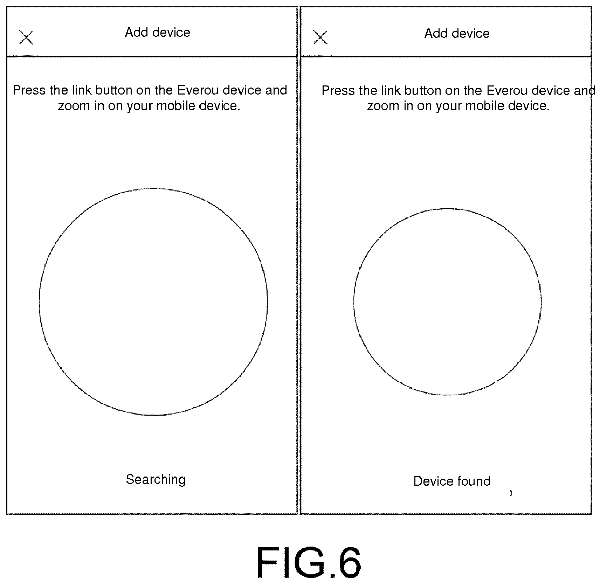

To pair the master (M1) with at least one slave (E1...En) It will be necessary to move the master device (M1) closer to the slave device (E1...En) and press the centre button shown in figure 6 so that the master M1 device can scan for slave devices (E1...En) until a warning (for example, a change in the tonality of the centre button, as shown in figure 6 in the image on the right) indicates that it is in *paired* mode and the slave device is located and added to a particular location.

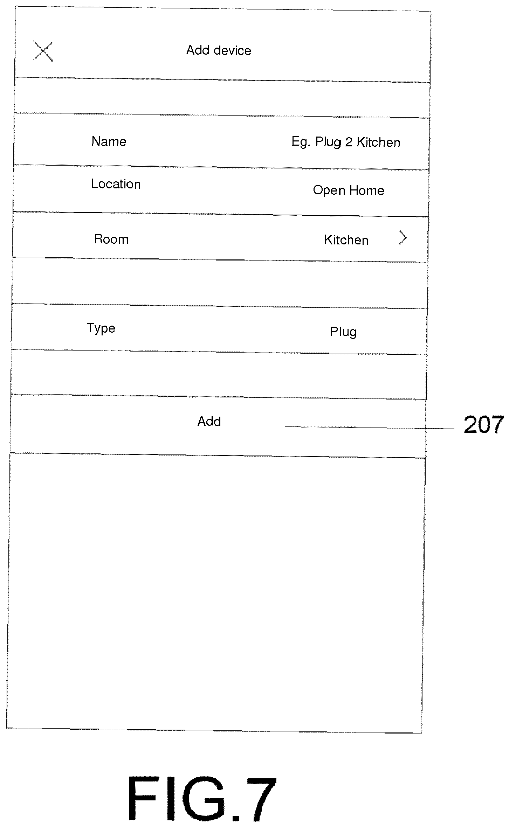

With the pairing process there is a data exchange between the master device (M1...Mn) and slave device (E1...En) such a way that this last one will send a series of parameters to the master device (M1...Mn) including the name of the slave device (E1...En), which in the example illustrated in figures 5 to 8 is the "kitchen plug 2", the location (L1...Ln) which in the same example is defined as "Open Home" and the room where it is located, which is nothing more than a location within the main location where the slave device is physically installed.

Regardless of the data contained in the slave device, an authorised user may change the name of the slave device - or the room where it is configured - before the pairing is complete, but they cannot change the device type nor the main location (L1...Ln). Once the process is complete the pairing 206 will be confirmed.

The confirmation 206 of the pairing implies the generation and exchange of 128-bit keys between the master device (M1... Mn), paired the slave device (E1 ...En) and the server (SC). For the pairing to occur, the user of the master device (we recall that is a portable electronic device 100 such as a mobile phone or tablet) must be authorised by the server (SC, we recall that is a computer 2) to control the slave device (E1...En).

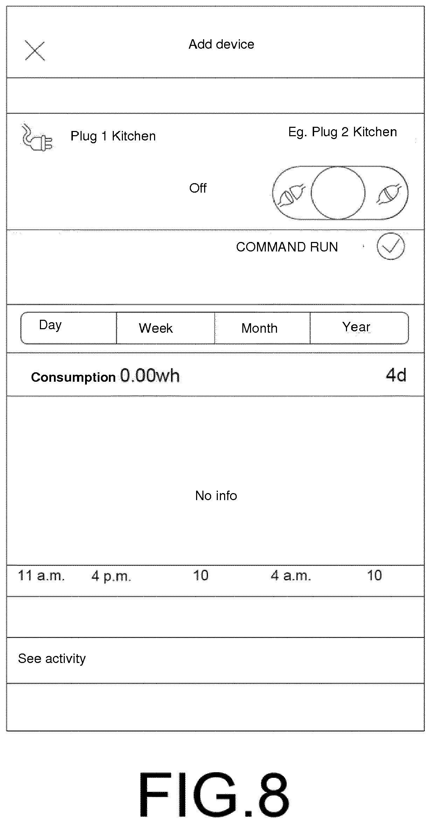

Finally, once the pairing is authorised, the paired slave device (E1...En) can be used by any of the authorised users on the server (SC) to control slave devices (E1 ...En) in each location (L1...Ln). In other words, in the non-limiting example of figures 5 to 8, it is only necessary for a user of a location to match a particular slave device so that all users authorized by the server (SC) in that location have access to the slave device automatically and can therefore be monitored, as shown in Figure 8, though this is not the only example.

## Claims

1. A computer-implemented method for linking multiple devices using the BLE protocol in a BLE network that comprises at least one master device (M1...Mn), at least one slave device (E1...En) and at least one central server (CS); and where the method is characterised because it comprises the stages of: (a) requesting the pairing of a master device (M1...Mn) with at least one slave device (E1...En); where that slave device (E1...En) is physically located in a location (L1...Ln) next to the master device (M1...Mn) which has made the request; (b) Confirm the pairing between the master device (M1... That you have made the pairing request and the slave device (E1...En) located in a certain physical location (L1...Ln); and where the confirmation of the pairing will be executed by the central server (CS) through the generation and exchange of unique 128-bit keys with the master device (M1...Mn) and slave device (E1...En), all this in such a way that only the pairing will be confirmed if the master device (M1...Mn) that performs the pairing request is authorised by the server (SC) to control the slave device (E1...En) whose pairing has been requested for physical localisation (L1...Ln) where the pairing has been requested.

2. The method according to claim 1, where the request for pairing implies the sending by the slave device (E1...En) of an identifier of the device itself as well as an identifier of its physical location (L1...Ln).

3. The method according to one of the claims 1-2 which comprises a stage of automatically replicating in the server (SC) the access permissions to a certain slave device (E1...En) paired with a master device (M1...Mn) a specific physical location (L1...Ln) for all the master devices (M1...Mn) previously authorised on the server (SC) for that same physical location (L1...Ln).

4. The method according to any of the claims 1-3 where a *master* device (M1...Mn) may be paired with one or more slaves (E1...En) within a single location at the same time.

5. The method in accordance with any of the previous claims where the master device (M1...Mn) is a portable electronic device (100).

6. The method according to any of the previous claims where the *slave* device (E1...En) is a physical within a particular location that comprises or integrates a processor and a memory that stores a program or programs that include multiple instructions that, when executed by its processor, make the slave device (E1...En) respond to a given instruction received from a master device (M1...Mn) paired with this slave device (E1...En) in a given physical location (L1... Ln) using BLE.

7. The method according to any of the previous claims where the central server is a computer (2).
